# EUROPÄISCHE PATENTSCHRIFT

(11) **EP 4 370 253 B1**
(45) Veröffentlichungstag und Bekanntmachung des Hinweises auf die Patenterteilung: **01.01.2025**
(21) Anmeldenummer: 22821426.8
(22) Anmeldetag: 22.11.2022
(51) Int. Cl.: B05B 12/00

(54) **BESCHICHTUNGSMITTEL-VERSORGUNGSEINRICHTUNG**
COATING AGENT SUPPLY DEVICE
DISPOSITIF D'ALIMENTATION D'AGENT DE REVÊTEMENT

(30) Priorität: 26.11.2021 DE 102021131136
(43) Veröffentlichungstag der Anmeldung: 22.05.2024
(73) Patentinhaber: Dürr Systems AG, 74321 Bietigheim-Bissingen (DE)
(72) Erfinder: MARTIN, Herbert, 71384 Weinstadt (DE); MICHELFELDER, Manfred, 71711 Steinheim (DE); FALHEIER, Alexander, 71640 Ludwigsburg (DE)
(74) Vertreter: v. Bezold & Partner Patentanwälte - PartG mbB
(86) Internationale Anmeldenummer: PCT/EP2022/082690
(87) Internationale Veröffentlichungsnummer: WO 2023/094339

(56) Entgegenhaltungen:
- EP-B1- 1 270 083
- EP-B1- 1 812 168
- US-A1- 2012 037 716

## Beschreibung

### Technisches Gebiet der Erfindung

Die Erfindung betrifft eine Beschichtungsmittel-Versorgungseinrichtung zur Zuführung von Beschichtungsmittel (z.B. Lack) zu einem Applikator (z.B. Rotationszerstäuber), insbesondere in einer Lackieranlage zur Lackierung von Kraftfahrzeugkarosseriebauteilen.

### Hintergrund der Erfindung

In modernen Lackieranlagen zur Lackierung von Kraftfahrzeugkarosseriebauteilen werden oftmals Lackversorgungen mit einer Molchleitung eingesetzt, die eine Molch-Quellstation mit einer Molch-Zielstation verbindet. In der Molchleitung können durch ein Schiebemedium (z.B. Druckluft) Molche entlang der Molchleitung bewegt werden.

Zum einen ermöglicht dies eine Entleerung und Reinigung der Molchleitung, indem ein Molch von dem Schiebemedium durch die Molchleitung bewegt wird und dabei den in der Molchleitung befindlichen Lack herausdrückt.

Zum anderen ermöglicht dieses Prinzip des Molchens auch eine Potenzialtrennung zwischen der auf Erdpotential liegenden Molch-Quellstation einerseits und der auf Hochspannungspotenzial liegenden Molch-Zielstation andererseits. Hierzu wird die Molchleitung entleert, gespült und gereinigt, so dass entlang der aus einem elektrisch isolierenden Material bestehenden Molchleitung keine elektrischen Überschläge erfolgen können.

Es ist weiterhin aus dem Stand der Technik bekannt, in einer solchen Beschichtungsmittel-Versorgungseinrichtung ein Molchpaket einzusetzen, das aus zwei Molchen besteht, nämlich einem sogenannten Pushout-Molch und einem sogenannten Reflow-Molch. Der Pushout-Molch ist hierbei in der Molchleitung auf der Seite der Molch-Quellstation angeordnet, während der Reflow-Molch in der Molchleitung auf der Seite der Molch-Zielstation angeordnet ist.

In der Molch-Quellstation kann in die Molchleitung zwischen dem Pushout-Molch und dem Reflow-Molch eine Lacksäule eingefüllt werden, die dann von dem Molchpaket zu der Molch-Zielstation transportiert wird, wo der zu applizierende Lack aus dem Molchpaket entnommen wird.

Nach dem Ende des Applikationsvorgangs kann dann überschüssiger Lack von dem Molchpaket wieder zurück zu der Molch-Quellstation transportiert werden, wo der Lack dann aus dem Molchpaket wieder in eine Rückführung zurückgeführt wird, was eine spätere Wiederverwendung des überschüssigen Lacks ermöglicht und damit den Lackverbrauch senkt.

Bei diesem sogenannten Reflow-Prozess wird das Molchpaket mit dem Pushout-Molch und dem Reflow-Molch in der ansonsten entleerten und nahezu trockenen Molchleitung zurück zu der Molch-Quellstation bewegt, was zu einer relativ hohen mechanischen Reibung zwischen den Molchen und der Molchleitung führt und die Standzeit der Molche negativ beeinflusst. Bei dem Reflow-Prozess dürfen die Molche deshalb eine Bewegungsgeschwindigkeit von maximal 1 m/s nicht überschreiten, da die Reibungswärme ansonsten zu einer übermäßigen Temperaturerhöhung an den Dichtlippen der Molche führen kann, was im Extremfall zu einer Deformation und zu einem Defekt der Molche führen könnte. Bei den bekannten molchbaren Leitungsanordnungen ist die Bewegungsgeschwindigkeit der Molche also begrenzt, was die Leistungsfähigkeit der bekannten Lackieranlagen begrenzt.

Aus EP 1 812 168 B1 ist eine solche Beschichtungsmittel-Versorgungseinrichtung mit einer Molchleitung bekannt. Hierbei wird das Problem der Reibung der Molche in der Molchleitung dadurch zumindest teilweise gelöst, dass Schmiermittel (z.B. Lösemittel) zwischen den beiden Molchen des Molchpakets in die Molchleitung eingeleitet wird, um die Reibung der Molche in der Molchleitung zu verringern. Die Schmiermittel-Einspeisestelle für das Einspeisen des Schmiermittels in die Molchleitung befindet sich hierbei in der Molch-Zielstation, damit das Schmiermittel zwischen den beiden Molchen des Molchpakets in die Molchleitung eingeleitet werden kann.

Diese bekannte Beschichtungsmittel-Versorgungseinrichtung löst das Problem der Reibung der Molche in der Molchleitung jedoch noch nicht befriedigend, da bei einem Reflow-Prozess die Dichtlippen des Pushout-Molchs nicht geschmiert werden. Auch bei dieser bekannten Beschichtungsmittel-Versorgungseinrichtung ist deshalb die maximal zulässige Bewegungsgeschwindigkeit der Molche bei einem Reflow-Prozess begrenzt.

Ferner ist zum technischen Hintergrund der Erfindung auch hinzuweisen auf DE 603 02 702 T2, EP 1 270 083 B1 und EP 1 812 168 B1.

Schließlich offenbart US 2012/037716 A1 eine Beschichtungsmittel-Versorgungseinrichtung gemäß dem Oberbegriff von Anspruch 1 und ein zugehöriges Betriebsverfahren gemäß dem Oberbegriff von Anspruch 12. Dieser Stand der Technik löst jedoch nicht die vorstehend genannten Probleme.

Der Erfindung liegt deshalb die Aufgabe zugrunde, eine entsprechend verbesserte Beschichtungsmittel-Versorgungseinrichtung zu schaffen.

### Beschreibung der Erfindung

Die erfindungsgemäße Beschichtungsmittel-Versorgungseinrichtung dient zur Zuführung von Beschichtungsmittel (z.B. Lack) zu einem Applikator (z.B. Rotationszerstäuber). Die Erfindung ist jedoch hinsichtlich des Beschichtungsmittels nicht auf Lack begrenzt, sondern grundsätzlich auch mit anderen Beschichtungsmitteln realisierbar. Darüber hinaus ist die Erfindung auch hinsichtlich des zu versorgenden Applikators nicht auf Rotationszerstäuber beschränkt, sondern grundsätzlich auch zur Versorgung von anderen Typen von Applikatoren (z.B. Druckköpfe) geeignet. In einem bevorzugten Ausführungsbeispiel der Erfindung dient die Beschichtungsmittel-Versorgungseinrichtung jedoch zur Zuführung von Lack zu einem Rotationszerstäuber in einer Lackieranlage zur Lackierung von Kraftfahrzeugkarosseriebauteilen.

In Übereinstimmung mit dem eingangs beschriebenen Stand der Technik weist die erfindungsgemäße Beschichtungsmittel-Versorgungseinrichtung eine Molch-Quellstation und eine Molch-Zielstation auf, die durch eine Molchleitung miteinander verbunden sind. In der Molchleitung befindet sich ein Molchpaket mit zwei Molchen zum Einspannen des Beschichtungsmittels zwischen den beiden Molchen des Molchpakets, so dass das Molchpaket eine Beschichtungsmittelsäule zwischen der Molch-Quellstation und der Molch-Zielstation transportieren kann. Der stromabwärts gelegene Molch wird hierbei auch als Reflow-Molch bezeichnet, während der stromaufwärts gelegene Molch hierbei als Pushout-Molch bezeichnet wird.

Der Pushout-Molch wird nämlich angetrieben, um die in dem Molchpaket eingespannte Beschichtungsmittelsäule in einem sogenannten Pushout-Prozess von der Molch-Quellstation zu der Molch-Zielstation zu transportieren.

Der Reflow-Molch wird dagegen angetrieben, um die in dem Molchpaket eingespannte Beschichtungsmittelsäule in einem sogenannten Reflow-Prozess von der Molch-Zielstation zu der Molch-Quellstation zurück zu transportieren.

Die Begriffe "stromaufwärts" und "stromabwärts" beziehen sich hierbei und im Folgenden auf die normale Förderrichtung von der Molch-Quellstation zu der Molche-Zielstation, d.h. nicht auf den Reflow-Prozess, in dem die Strömungsrichtung umgekehrt ist.

Darüber hinaus weist auch die erfindungsgemäße Beschichtungsmittel-Versorgungseinrichtung in Übereinstimmung mit der eingangs beschriebenen bekannten Beschichtungsmittel-Versorgungseinrichtung gemäß EP 1 812 168 B1 eine Schmiermittel-Zuleitung auf, um ein Schmiermittel zuzuführen, das eine reibungsmindernde Schmierung der Molche in der Molchleitung ermöglichen soll, wenn das Molchpaket zwischen der Molch-Zielstation und der Molch-Quellstation bewegt wird.

Weiterhin verfügt auch die erfindungsgemäße Beschichtungsmittel-Versorgungseinrichtung in Übereinstimmung mit der eingangs beschriebenen bekannten Beschichtungsmittel-Versorgungseinrichtung gemäß EP 1 812 168 B1 über ein steuerbares Schmiermittelventil, das die Schmiermittel-Zuleitung mit der Molchleitung verbindet, um die Einleitung des Schmiermittels an einer Schmiermittel-Einspeisestelle in die Molchleitung zu steuern.

Es wurde bereits vorstehend zum Stand der Technik erläutert, dass sich die Schmiermittel-Einspeisestelle im Stand der Technik in der Molch-Zielstation befindet, damit das Schmiermittel zwischen den beiden Molchen des Molchpakets in die Molchleitung eingeleitet werden kann. Im Gegensatz dazu sieht die Erfindung nun vor, dass sich die Schmiermittel-Einspeisestelle in der Molchleitung zwischen der Molch-Quellstation und der Molch-Zielstation befindet, d.h. außerhalb der Molch-Zielstation und auch außerhalb der Molch-Quellstation. Dies ermöglicht es bei einem Reflow-Prozess, dass auch der Pushout-Molch geschmiert wird, indem das Schmiermittel in Bezug auf die Bewegungsrichtung des Pushout-Molchs während des Reflow-Prozesses vor dem Pushout-Molch in die Molchleitung eingeleitet wird. Diese Schmierung des Pushout-Molchs während des Reflow-Prozesses verringert die Reibung zwischen den Molchen und der Molchleitung und ermöglicht somit eine höhere Bewegungsgeschwindigkeit der Molche während des Reflow-Prozesses.

In einem bevorzugten Ausführungsbeispiel der Erfindung befindet sich das Schmiermittelventil in der Molchleitung näher an der Molch-Zielstation als an der Molch-Quellstation. Das Schmiermittelventil befindet sich also vorzugsweise in den stromabwärtigen 50 %, 40 %, 30 %, 20 %, 10 %, 5 % oder 3 % der Leitungslänge der Molchleitung. In absoluten Zahlen lässt sich entsprechend sagen, dass der Abstand zwischen dem Schmiermittelventil und der Molch-Zielstation entlang der Molchleitung vorzugsweise kleiner ist als 15 m, 10 m, 5 m, 3 m, 2 m, 1 m, 50 cm, 20 cm oder 10 cm. Diese Anordnung des Schmiermittelventils und damit auch der Schmiermittel-Einspeisestelle nahe der Molch-Zielstation ist vorteilhaft, damit die Molche bei einem Reflow-Prozess möglichst auf ihrer gesamten Bewegungsstrecke von der Molch-Zielstation zu der Molch-Quellstation von dem eingespeisten Schmiermittel geschmiert werden.

Es wurde bereits vorstehend zum Stand der Technik erläutert, dass bei der bekannten Beschichtungsmittel-Versorgungseinrichtung gemäß EP 1 812 168 B1 das Schmiermittel zwischen den beiden Molchen des Molchpakets in die Molchleitung eingespeist wird. Dies ist jedoch problematisch, wenn die in dem Molchpaket eingespeiste Beschichtungsmittelsäule nach dem Reflow-Prozess an der Molch-Quellstation wiederverwendet werden soll, da das eingespritzte Schmiermittel im Stand der Technik zu einer entsprechenden Verunreinigung der eingespannten Beschichtungsmittelsäule führt. Bei der erfindungsgemäßen Beschichtungsmittel-Versorgungseinrichtung soll deshalb verhindert werden, dass das Schmiermittel zwischen den beiden Molchen des Molchpakets in die Molchleitung eingespeist wird. Vielmehr soll das Schmiermittel bei einem Reflow-Prozess in Bezug auf die Bewegungsrichtung der Molche während des Reflow-Prozesses vor dem Molchpaket in die Molchleitung eingeleitet werden. Die erfindungsgemäße Beschichtungsmittel-Versorgungseinrichtung weist deshalb vorzugsweise einen Sensor auf, der an der Molchleitung angeordnet ist und dazu dient, den Füllungszustand der Molchleitung an einer Messstelle zu erfassen.

Beispielsweise kann dieser Sensor unterscheiden, ob die Molchleitung mit Beschichtungsmittel oder mit Luft gefüllt ist, wobei die Einspeisung des Schmiermittels in die Molchleitung dann blockiert werden kann, wenn der Sensor erkennt, dass die Molchleitung an der Messstelle mit Beschichtungsmittel gefüllt ist. Die Einleitung des Schmiermittels in die Molchleitung wird also vorzugsweise nur dann freigegeben, wenn der Sensor detektiert, dass die Molchleitung an der Messstelle mit Luft gefüllt ist.

Eine alternative Messmethode besteht darin, dass der Sensor das Passieren der Molche erkennt und an eine Steuereinheit meldet. Beispielsweise kann hierzu ein Permanentmagnet in die Molche eingebettet sein, wobei der Permanentmanget von einem Magnetsensor erfasst wird, wenn der Molch mit dem eingebetteten Permanentmagneten den Magnetsensor passiert. Alternativ besteht die Möglichkeit, dass ein Stahlkern in die Molche eingebettet ist, der dann von einem induktiven Sensor detektiert werden kann. Die Steuereinheit weiß dann stets, wo sich das Molch-Paket mit den beiden Molchen befindet, so dass die Steuereinheit die Einspeisung des Schmiermittels in die Molchleitung blockieren kann, wenn sich das Molch-Paket an der Schmiermittel-Einspeisestelle befindet.

In dem bevorzugten Ausführungsbeispiel der Erfindung ist der Sensor zwischen dem Schmiermittelventil und der Molch-Zielstation angeordnet und zwar vorzugsweise näher an dem Schmiermittelventil als an der Molch-Zielstation. Der Abstand zwischen der Messstelle und der Schmiermittel-Einspeisestelle sollte also möglichst klein sein, damit der Sensor Informationen über den Füllungszustand der Molchleitung an der Schmiermittel-Einspeisestelle liefert. Der Abstand zwischen der Messstelle einerseits und der Schmiermittel-Einspeisestelle andererseits ist also entlang der Molchleitung vorzugsweise kleiner als 1 m, 50 cm, 25 cm, 10 cm oder sogar kleiner als 5 cm.

Weiterhin ist zu erwähnen, dass das Schmiermittelventil vorzugsweise in der Molchleitung angeordnet ist und einen durchgehenden Molchkanal aufweist, der von den Molchen passiert werden kann. Das Schmiermittelventil wird hierzu also in die Molchleitung eingesetzt, die aus mehreren Schlauchleitungen bestehen kann. Der integrierte Molchkanal in dem Schmiermittelventil erlaubt es hierbei, dass die Molche entlang der Molchleitung durch das Schmiermittelventil hindurch geleitet werden können.

In dem bevorzugten Ausführungsbeispiel der Erfindung weist das Schmiermittelventil einen ersten Leitungsanschluss auf, an den ein stromaufwärtiger Leitungsabschnitt (z.B. Schlauchleitung) der Molchleitung angeschlossen ist. Darüber hinaus weist das Schmiermittelventil vorzugsweise einen zweiten Leitungsanschluss auf, an den ein stromabwärtiger Leitungsabschnitt (z.B. Schlauchleitung) der Molchleitung angeschlossen ist. Zwischen den beiden Leitungsanschlüssen verläuft in dem Schmiermittelventil der Molchkanal. Die beiden Leitungsanschlüsse sind hierbei vorzugsweise axial fluchend angeordnet, jedoch ist grundsätzlich auch eine gekrümmte Ausrichtung der beiden Leitungsanschlüsse relativ zu ein anderer möglich, sofern die Molchbarkeit dadurch nicht beeinträchtigt wird.

Weiterhin ist zu erwähnen, dass die beiden Leitungsanschlüsse vorzugsweise als Schlauchanschlüsse mit einem Schraubflansch ausgebildet sind.

Darüber hinaus weist das Schmiermittelventil einen Schmiermittelanschluss auf, um das Schmiermittel zuzuführen.

Weiterhin enthält das Schmiermittelventil vorzugsweise eine verschiebbare Ventilnadel, die in Abhängigkeit von ihrer Ventilstellung einen Ventilsitz entweder freigibt oder verschließt, wobei die Ventilnadel vorzugsweise rechtwinklig zu dem in dem Schmiermittelventil verlaufenden Multikanal ausgerichtet ist.

Ferner ist zu erwähnen, dass das Schmiermittelventil vorzugsweise pneumatisch angesteuert wird, jedoch ist auch eine elektrische oder elektromagnetische Ansteuerung des Schmiermittelventils möglich.

Es wurde eingangs bereits zum Stand der Technik erläutert, dass die Molchleitung eine Potenzialtrennung zwischen der auf Erdpotential liegenden Molch-Quellstation und der Molch-Zielstation ermöglicht, die wahlweise auf Erdpotential liegt oder auf Hochspannungspotenzial aufgeladen werden kann. Dies ist vorzugsweise auch bei der erfindungsgemäßen Beschichtungsmittel-Versorgungseinrichtung der Fall.

Zu der Molch-Quellstation ist weiterhin zu erwähnen, dass diese vorzugsweise eine steuerbare Ventilanordnung mit zahlreichen Ventilen enthält, um die Molchleitung wahlweise mit einer der folgenden Komponenten zu verbinden:
- Mindestens einer Beschichtungsmittel-Zuführung zur Zuführung von Beschichtungsmittel,
- einer Spülmittel-Zuführung zur Zuführung von Spülmittel zum Spülen der Molchleitung,
- einer Druckluft-Zuführung zur Zuführung von Druckluft, beispielsweise als Schiebemedium zum Bewegen der Molche von der Molch-Quellstation zu der Molch-Zielstation,
- einer Beschichtungsmittel-Rückführung zur Rückführung von Beschichtungsmittel für eine Wiederverwendung des Beschichtungsmittels nach einem Reflow-Prozess,
- einer Entsorgung zur Entsorgung von Spülmittel und/oder Beschichtungsmittel,
- einer Zuleitung für ein sonstiges Schiebemedium zum Schieben der Molche von der Molch-Quellstation zu der Molch-Zielstation,
- Eine Rückführung zur Entlastung des Luftdrucks in der Molchleitung während des Reflow-Prozesses.

Darüber hinaus weist vorzugweise auch die Molch-Zielstation eine steuerbare Ventilanordnung auf, die zahlreiche steuerbare Ventile enthält, um die Molchleitung in der Molch-Zielstation wahlweise mit einer der folgenden Komponenten zu verbinden:
- einer Farbleitung zur Weiterleitung des entnommenen Beschichtungsmittels von der Molch-Zielstation zu dem Applikator (z.B. Rotationszerstäuber),
- einer Druckluft-Zuführung zur Zuführung von Druckluft als Schiebemedium zum Drücken der Molche von der Molch-Zielstation zurück zu der Molch-Quellstation, beispielsweise im Rahmen des wie Reflow-Prozesses,
- einer Spülmittel-Zuführung zur Zuführung von Spülmittel zum Spülen der Molchleitung,
- einer Beschichtungsmittel-Rückführung zur Rückführung von Beschichtungsmittel für eine Wiederverwendung des Beschichtungsmittels.
- Eine Rückführung zur Entlastung des Luftdrucks in der Molchleitung während des Pushout-Prozesses, d.h. während eines Lade-Prozesses (Molchfahrt von der Molch-Quellstation zu der Molch-Zielstation).

Weiterhin ist zu erwähnen, dass die Beschichtungsmittel-Versorgungseinrichtung vorzugsweise eine Steuereinheit aufweist, die die Ventilanordnungen in der Molch-Quellstation und in der Molch-Zielstation ansteuert. Darüber hinaus fragt die Steuereinheit den vorstehend erwähnten Sensor ab und steuert das Schmiermittelventil entsprechend an.

Ferner ist zu erwähnen, dass die Erfindung nicht nur Schutz beansprucht für die vorstehend beschriebene erfindungsgemäße Beschichtungsmittel-Versorgungseinrichtung. Vielmehr beansprucht die Erfindung auch Schutz für eine Beschichtungsanlage zur Beschichtung von Bauteilen mit einem Beschichtungsmittel (z.B. Lack), wobei die Beschichtungsanlage die vorstehend beschriebene erfindungsgemäße Beschichtungsmittel-Versorgungseinrichtung aufweist. Darüber hinaus weist die erfindungsgemäße Beschichtungsanlage auch mindestens einen Applikator (z.B. Rotationszerstäuber) und vorzugsweise auch einen Applikationsroboter auf, der den Applikator führt.

Schließlich beansprucht die Erfindung auch Schutz für ein entsprechendes Betriebsverfahren, wobei sich die einzelnen Verfahrensschritte des erfindungsgemäßen Betriebsverfahrens bereits aus der vorstehenden Beschreibung der erfindungsgemäßen Beschichtungsmittel-Versorgungseinrichtung ergeben und deshalb nicht näher beschrieben werden müssen.

Es ist jedoch erwähnenswert, dass das erfindungsgemäße Betriebsverfahren vorsieht, dass das Molchpaket im Rahmen des Reflow-Prozesses mit einer wesentlich größeren Bewegungsgeschwindigkeit bewegt wird als dies im Stand der Technik möglich war. Die Bewegungsgeschwindigkeit der Molche beträgt deshalb insbesondere bei dem Reflow-Prozess mehr als 1 m/s, 2 m/s, 5 m/s, 10 m/s oder sogar mehr als 20 m/s. Dies wird durch die erfindungsgemäße Schmierung der Molche ermöglicht, wie vorstehend bereits beschrieben wurde.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.

### Kurzbeschreibung der Zeichnungen

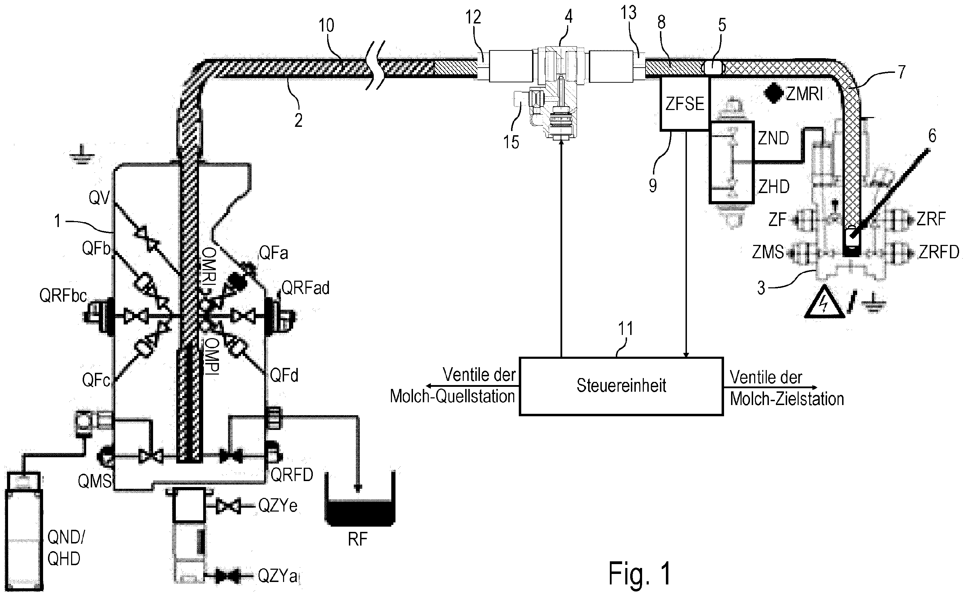

Figur 1 zeigt eine schematische Darstellung einer erfindungsgemäßen Lackversorgung zur Versorgung eines Rotationszerstäubers in einer Lackieranlage zur Lackierung von Kraftfahrzeugkarosseriebauteilen.
Figur 2 zeigt eine Schnittansicht eines Schmiermittelventils in der Lackversorgung gemäß Figur 1.
Figur 3 zeigt ein Flussdiagramm zur Verdeutlichung des erfindungsgemäßen Betriebsverfahrens der Lackversorgung gemäß Figur 1.

### Detaillierte Beschreibung der Zeichnungen

Im Folgenden wird nun das in den Zeichnungen dargestellte erfindungsgemäße Ausführungsbeispiel einer Lackversorgung beschrieben, wobei die Lackversorgung in einer Lackieranlage zur Lackierung von Kraftfahrzeugkarosseriebauteilen dazu dient, einen Rotationszerstäuber (nicht dargestellt) mit dem zu applizierenden Lack zu versorgen.

So weist die Lackversorgung eine Molch-Quellstation 1 auf, die über mehrere Lackanschlüsse QFa-QFd mit Lack versorgt wird.

Die Molch-Quellstation 1 ist über eine Molchleitung 2 mit einer Molch-Zielstation 3 verbunden, die den zu applizierenden Lack über einen Anschluss ZF an den Rotationszerstäuber (nicht dargestellt) weiterleitet.

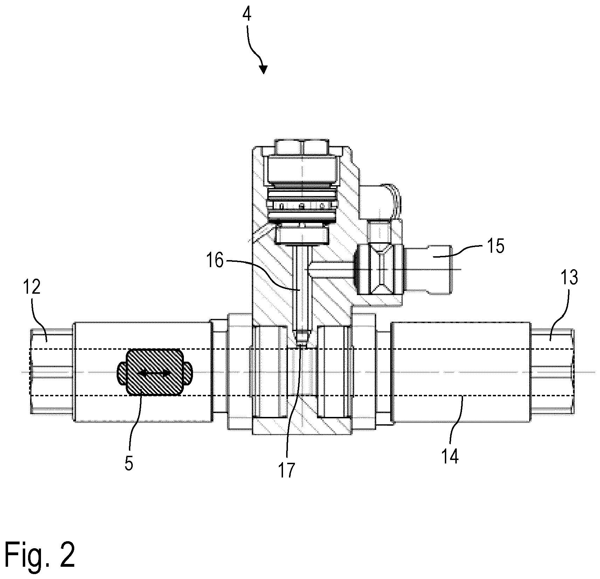

In der Molchleitung 2 ist ein Schmiermittelventil 4 angeordnet, das detailliert in Figur 2 dargestellt ist und noch eingehend beschrieben wird. An dieser Stelle ist lediglich kurz zu erwähnen, dass das Schmiermittelventil 4 Schmiermittel in die Molchleitung 2 einleiten soll, um die Reibung in der Molchleitung 2 zu verringern.

Weiterhin befindet sich in der Molchleitung 2 ein verschiebbares Molchpaket, das aus zwei Molchen besteht, nämlich einem Pushout-Molch 5 und einem Reflow-Molch 6. In dem Molchpaket kann zwischen dem Pushout-Molch 5 und dem Reflow-Molch 6 eine Lacksäule 7 eingespannt werden, die bei einem Pushout-Prozess von der Molch-Quellstation 1 zu der Molch-Zielstation 3 und bei einem Reflow-Prozess in umgekehrter Richtung von der Molch-Zielstation 3 zu der Molch-Quellstation 1 transportiert wird.

Die Bewegung des Molchpakets von der Molch-Quellstation 1 zu der Molch-Zielstation 3 erfolgt bei einem Pushout-Prozess dadurch, dass an der Molch-Quellstation 1 über einen Anschluss QMS ein Schiebemedium (z.B. Druckluft) in die Molchleitung 2 eingeleitet wird, wobei das Schiebemedium dann das Molchpaket mit dem Pushout-Molch 5 und dem Reflow-Molch 6 entlang der Molchleitung 2 zu der Molch-Zielstation 3 transportiert.

Bei einem Reflow-Prozess wird das Molchpaket mit dem Pushout-Molch 5 und dem Reflow-Molch 6 dagegen entlang der Molchleitung 2 in umgekehrter Richtung transportiert, d.h. von der Molch-Zielstation 3 zu der Molch-Quellstation 1. Hierzu wird an der Molch-Zielstation 3 über einen Anschluss ZMS ein Schiebemedium (z.B. Druckluft) in die Molchleitung 2 eingeleitet, wobei das Schiebemedium dann auf den Reflow-Molch 6 drückt und das komplette Molchpaket mit der dazwischen eingespannten Lacksäule 7 entlang der Molchleitung 2 zu der Molch-Quellstation 1 transportiert. Die in die Molch-Quellstation 1 zurückgeführte Lacksäule 7 kann dann in die Lackanschlüsse QFa-QFd zurückgeführt werden, um eine Wiederverwendung zu ermöglichen.

Bei dem Reflow-Prozess bewegt sich das Molch-Paket mit dem Pushout-Molch 5 und dem Reflow-Molch 6 und der dazwischen eingespannten Lacksäule 7 in der ansonsten trockenen Molchleitung 2, d.h. die Molchleitung 2 ist zwischen dem Pushout-Molch 5 und der Molch-Quellstation 1 leer. Dies führt zu einer erhöhten Reibung zwischen dem Pushout-Molch 5 und den Wänden der Molchleitung 2, was sich negativ auf die Standzeit des Pushout-Molchs 5 auswirkt und die maximal mögliche Bewegungsgeschwindigkeit des Molchpakets während des Reflow-Prozesses begrenzt, damit eine Beschädigung des Pushout-Molch 5 oder des Reflow-Molchs 6 verhindert wird. Die Erfindung sieht deshalb vor, dass bei einem Reflow-Prozess ein Schmiermittel zwischen dem Pushout-Molch 5 und der Molch-Quellstation 1 in die Molchleitung 2 eingespeist wird, wobei das Schmiermittel dann in der Molchleitung 2 eine Schmiermittelsäule 8 bildet, die sich bei dem Reflow-Prozess bezüglich der Bewegungsrichtung des Pushout-Molchs 5 vor dem Pushout-Molch 5 befindet. Dadurch wird die Reibung des Pushout-Molchs 5 während des Reflow-Prozesses in der ansonsten leeren Molchleitung 2 verringert, was eine größere Bewegungsgeschwindigkeit des Molchpakets während des Reflow-Prozesses ermöglicht.

Die Einleitung des Schmiermittels in die Molchleitung 2 erfolgt durch das bereits vorstehend erwähnte Schmiermittelventil 4, das in der Molchleitung 2 angeordnet ist. Bei der Einleitung des Schmiermittels in die Molchleitung 2 muss jedoch verhindert werden, dass das Schmiermittel in die Lacksäule 7 eingespeist wird, die in dem Molchpaket zwischen dem Pushout-Molch 5 und dem Reflow-Molch 6 eingespannt ist. Dies würde nämlich zu einer Verunreinigung des Lacks in der Lacksäule 7 führen, was eine Wiederverwendung des Lacks verhindern würde.

Die erfindungsgemäße Lackversorgung weist deshalb einen Sensor 9 auf, der an der Molchleitung 2 nahe der Molch-Zielstation 3 angeordnet ist und den Füllungszustand der Molchleitung 2 erkennt. So befindet sich in der Molchleitung 2 während des Reflow-Prozesses in der Bewegungsrichtung vor dem Molchpaket mit der eingespannten Lacksäule 7 eine Luftsäule 10, wobei der Sensor 9 erkennen kann, ob sich an der Messstelle in der Molchleitung 2 die Luftsäule 10 oder die Lacksäule 7 befindet. Der Sensor 9 wird von einer Steuereinheit 11 abgefragt, die dann das Schmiermittelventil 4 entsprechend ansteuert. Dies bedeutet, dass über das Schmiermittelventil 4 nur dann Schmiermittel in die Molchleitung 2 eingespeist wird, wenn der Sensor 9 erkannt hat, dass sich an der Messstelle in der Molchleitung 2 die Luftsäule 10 befindet. Falls der Sensor 9 dagegen erkennt, dass sich in der Molchleitung 2 an der Messstelle die Lacksäule 7 befindet, so blockiert die Steuereinheit 11 die Einspeisung des Schmiermittels in die Molchleitung 2.

Wichtig ist hierbei die Position des Schmiermittelventils 4, das sich möglichst nahe der Molch-Zielstation 3 befinden sollte, damit der Pushout-Molch 5 nach Möglichkeit bei seiner gesamten Rückwärtsbewegung von der Molch-Zielstation 3 zu der Molch-Quellstation 1 im Rahmen des Reflow-Prozesses geschmiert wird. Der Abstand zwischen dem Schmiermittelventil 4 und der Molch-Zielstation 3 entlang der Molchleitung kann deshalb beispielsweise kleiner als 10 cm sein.

Weiterhin ist die Position des Sensors 9 entlang der Molchleitung 2 wichtig. So sollte sich der Sensor 9 mit seiner Messstelle möglichst nahe der Schmiermittel-Einspeisestelle des Schmiermittelventils 4 befinden. Dies ist wichtig, damit der Sensor 9 dann den Füllungszustand der Molchleitung 2 an der Schmiermittel-Einspeisestelle des Schmiermittelventils 4 erfasst.

Weiterhin ist zu erwähnen, dass die Steuereinheit 11 auch zahlreiche Ventile in der Molch-Quellstation 1 und zahlreiche Ventile in der Molch-Zielstation 3 ansteuert, um den Betrieb der Lackversorgung zu steuern. An dieser Stelle ist lediglich zu erwähnen, dass die Molch-Quellstation 1 folgende Anschlüsse aufweist:
- QFa: Lackanschluss der Molch-Quellstation für Zuführung Lack a
- QFb: Lackanschluss der Molch-Quellstation für Zuführung Lack b
- QFc: Lackanschluss der Molch-Quellstation für Zuführung Lack c
- QFd: Lackanschluss der Molch-Quellstation für Zuführung Lack d
- QHD: Anschluss der Molch-Quellstation für Zuführung Hochdruck
- QMS: Anschluss der Molch-Quellstation für Zuführung Schiebemedium
- QND: Anschluss der Molch-Quellstation für Zuführung Niederdruck
- QRFad: Rückführung in der Molch-Quellstation für Spülprozess
- QRFbc: Rückführung in der Molch-Quellstation für Spülprozess
- QV: Anschluss der Molch-Quellstation für Zuführung Verdünner
- RF: Rückführung
- QZYe: Anschluss der Molch-Quellstation zum Einfahren des Zylinders
- QZYa: Anschluss der Molch-Quellstation zum Ausfahren des Zylinders
- QRFD: Anschluss der Molch-Quellstation für Rückführung Drossel
- QMPI: Anschluss der Molch-Quellstation Push-out-Initiator
- QMRI: Anschluss der Molch-Quellstation Reflow-Initiator

Weiterhin ist zu erwähnen, dass die Molch-Zielstation 3 noch folgende Anschlüsse aufweist:
- ZF: Anschluss der Molch-Zielstation für Abgabe Lack zum Applikator
- ZRF: Anschluss der Molch-Zielstation für Abgabe Lack in Rückführung
- ZHD: Anschluss der Molch-Zielstation für Zuführung Hochdruck
- ZND: Anschluss der Molch-Zielstation für Zuführung Niederdruck
- ZMS: Anschluss der Molch-Zielstation für Zuführung Molch-Schiebemedium
- ZRFD: Anschluss der Molch-Zielstation für Rückführung Drossel
- ZMRI: Molch-Zielstation Molch-Reflow-Initiator

Weiterhin ist zu erwähnen, dass die Molch-Quellstation 1 im Betrieb auf einem elektrischen Erdpotential liegt. Die Molch-Zielstation 3 kann dagegen wahlweise auf Erdpotential oder auf Hochspannungspotenzial gelegt werden, um eine elektrostatische Beschichtungsmittelaufladung zu ermöglichen. Bei einer Aufladung der Molch-Zielstation 3 auf Hochspannungspotenzial ist die Molchleitung 2 vollständig entleert und gereinigt, um einen möglichst größten elektrischen Widerstand zu bilden, der eine Potenzialtrennung zwischen der Molch-Quellstation 1 einerseits und der Molch-Zielstation 3 andererseits ermöglicht.

Im Folgenden wird nun die detaillierte Darstellung des Schmiermittelventils 4 gemäß Figur 2 beschrieben. So weist das Schmiermittelventil 4 zwei Leitungsanschlüsse 12, 13 auf, die mit einem stromaufwärtigen bzw. stromabwärtigen Leitungsabschnitt der Molchleitung 2 verbunden werden. Hierbei ist zu erwähnen, dass die beiden Leitungsanschlüsse 12, 13 axial fluchtend angeordnet sind. Dies ermöglicht die Durchführung eines Molchkanals 14 durch das Schmiermittelventil 4. Das Molchpaket mit dem Pushout-Molch 5 und dem Reflow-Molch 6 kann also den Molchkanal 14 in dem Schmiermittelventil 4 ungehindert passieren.

Darüber hinaus weist das Schmiermittelventil 4 einen Schmiermittelanschluss 15 auf, über den das gewünschte Schmiermittel zugeführt werden kann.

In dem Schmiermittelventil 4 befindet sich eine verschiebbare Ventilnadelnadel 16, die in Abhängigkeit von ihrer Ventilstellung einen Ventilsitz 17 freigibt oder verschließt. Bei einem Freigeben des Ventilsitzes 17 durch die Ventilnadel 16 kann dann Schmiermittel über den Schmiermittelanschluss 15 in den Molchkanal 14 und damit in die Molchleitung 2 eingeleitet werden.

Die Ansteuerung der Ventilnadel 16 kann beispielsweise elektromagnetisch erfolgen.

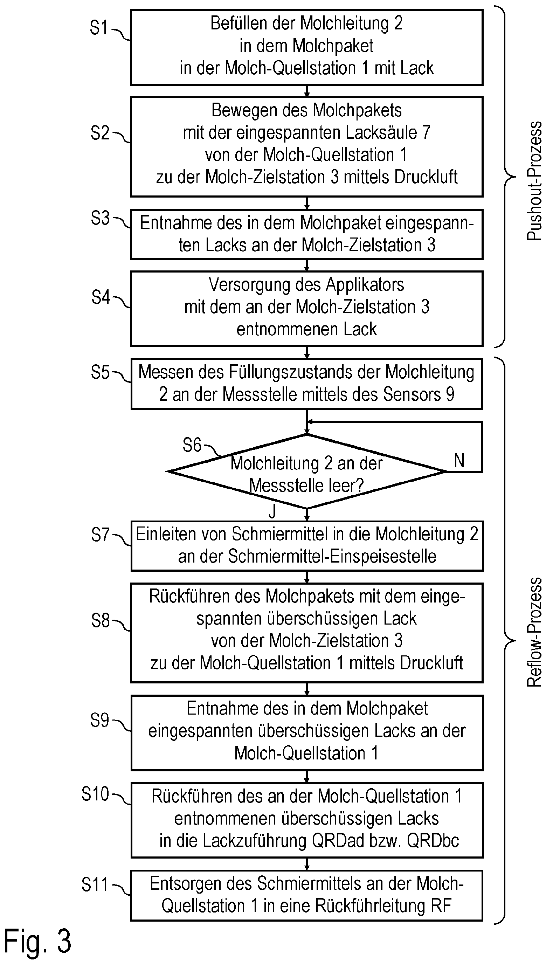

Im Folgenden wird nun das Flussdiagramm gemäß Figur 3 beschrieben, das das Betriebsverfahren der erfindungsgemäßen Lackversorgung erläutert.

Die Schritte S1-S4 sehen hierbei den sogenannten Pushout-Prozess vor, der dazu dient, den Applikator mit Lack zu versorgen.

In einem ersten Schritt S1 wird die Molchleitung 2 in dem Molchpaket zwischen dem Pushout-Molch 5 und dem Reflow-Molch 6 an der Molch-Quellstation 1 mit Lack befüllt.

Anschließend wird das Molchpaket mit der eingespannten Lacksäule 7 dann in einem Schritt S2 von der Molch-Quellstation 1 zu der Molch-Zielstation 3 bewegt. Hierzu wird eine Schiebemedium (z.B. Druckluft) an der Molch-Quellstation 1 über den Anschluss QMS in die Molchleitung 2 eingeleitet, wobei das Schiebemedium dann das Molchpaket entlang der Molchleitung 2 zu der Molch-Zielstation 3 drückt.

Nach der Ankunft des Molchpakets in der Molch-Zielstation 3 wird dann Lack aus der eingespannten Lacksäule 7 aus der Molchleitung 2 entnommen und dem Applikator zugeführt.

Die Schritte S5-S11 verdeutlichen nun den sogenannten Reflow-Prozess.

In einem Schritt S5 wird hierbei der Füllungszustand der Molchleitung 2 an der Messstelle des Sensors 9 gemessen.

In einem Schritt S6 wird dann geprüft, ob die Molchleitung 2 an der Messstelle des Sensors 9 leer ist.

Falls dies der Fall ist, so wird in einem Schritt S7 Schmiermittel von dem Schmiermittelventil 4 in die Molchleitung 2 eingespeist, wobei das Schmiermittel dann die Schmiermittelsäule 8 bildet.

Anschließend wird das Molchpaket mit der eingespannten Lacksäule 7 dann in einem Schritt S8 von der Molch-Zielstation 3 zu der Molch-Quellstation 1 zurückgeführt. Hierzu wird an der Molch-Zielstation 3 ein Schiebemedium (z.B. Druckluft) über den Anschluss ZMS in die Molchleitung 2 eingeleitet. Das Schiebemedium drückt dann das Molchpaket entlang der Molchleitung 2 zu der Molch-Quellstation 1.

Nach der Ankunft des Molchpakets in der Molch-Quellstation 1 wird dann in Schritt S10 der Lack aus der eingespannten Lacksäule 7 aus dem Molchpaket entnommen (Schritt S9) und in die Lackanschlüsse QFa, QFb, QFc, QFd (Rückführungen) zurückgeführt, was eine Wiederverwendung ermöglicht.

Schließlich kann dann in einem Schritt S11 das Schmiermittel aus der Schmiermittelsäule 8 in die Rückführung RF entsorgt werden.

### Bezugszeichenliste

- 1: Molch-Quellstation
- 2: Molchleitung
- 3: Molch-Zielstation
- 4: Schmiermittelventil in der Molchleitung
- 5: Pushout-Molch zum Herausdrücken des zu applizierenden Lacks
- 6: Reflow-Molch zur Rückführung von überschüssigem Lack
- 7: Lacksäule zwischen Pushout-Molch und Reflow-Molch
- 8: Schmiermittelsäule vor dem Pushout-Molch
- 9: Sensor in der Molchleitung
- 10: Luftsäule in der Molchleitung
- 11: Steuereinheit
- 12: Leitungsanschluss des Schmiermittelventils mit Schraubflansch
- 13: Leitungsanschluss des Schmiermittelventils mit Schraubflansch
- 14: Molchkanal in dem Schmiermittelventil
- 15: Schmiermittelanschluss des Schmiermittelventils
- 16: Ventilnadel des Schmiermittelventils
- 17: Ventilsitz in dem Schmiermittelventil
- QFa: Lackanschluss der Molch-Quellstation für Zuführung Lack a
- QFb: Lackanschluss der Molch-Quellstation für Zuführung Lack b
- QFc: Lackanschluss der Molch-Quellstation für Zuführung Lack c
- QFd: Lackanschluss der Molch-Quellstation für Zuführung Lack d
- QHD: Anschluss der Molch-Quellstation für Zuführung Hochdruck
- QMS: Anschluss der Molch-Quellstation für Zuführung Schiebemedium
- QND: Anschluss der Molch-Quellstation für Zuführung Niederdruck
- QRFad: Rückführung in der Molch-Quellstation für Spülprozess
- QRFbc: Rückführung in der Molch-Quellstation für Spülprozess
- QV: Anschluss der Molch-Quellstation für Zuführung Verdünner
- RF: Rückführung
- QZYe: Anschluss der Molch-Quellstation zum Einfahren des Zylinders
- QZYa: Anschluss der Molch-Quellstation zum Ausfahren des Zylinders
- QRFD: Anschluss der Molch-Quellstation für Rückführung Drossel
- QMPI: Anschluss der Molch-Quellstation Push-out-Initiator
- QMRI: Anschluss der Molch-Quellstation Reflow-Initiator
- ZF: Anschluss der Molch-Zielstation für Abgabe Lack zum Applikator
- ZRF: Anschluss der Molch-Zielstation für Abgabe Lack in Rückführung
- ZHD: Anschluss der Molch-Zielstation für Zuführung Hochdruck
- ZND: Anschluss der Molch-Zielstation für Zuführung Niederdruck
- ZMS: Anschluss der Molch-Zielstation für Zuführung Molch-Schiebemedium
- ZRFD: Anschluss der Molch-Zielstation für Rückführung Drossel
- ZMRI: Molch-Zielstation Molch-Reflow-Initiator

## Patentansprüche

1. Beschichtungsmittel-Versorgungseinrichtung zur Zuführung von Beschichtungsmittel zu einem Applikator, insbesondere in einer Lackieranlage zur Lackierung von Kraftfahrzeugkarosseriebauteilen, mit
a) einer Molch-Quellstation (1),
b) einer Molch-Zielstation (3),
c) einer Molchleitung (2), wobei die Molchleitung (2) die Molch-Quellstation (1) mit der Molch-Zielstation (3) verbindet,
d) einem Molchpaket mit zwei in der Molchleitung (2) angeordneten Molchen (5, 6) zum Einspannen des Beschichtungsmittels zwischen den beiden Molchen (5, 6) des Molchpakets für einen Beschichtungsmitteltransport zwischen der Molch-Quellstation (1) und der Molch-Zielstation (3),
e) einer Schmiermittel-Zuleitung (15) zur Zuführung eines Schmiermittels für eine reibungsmindernde Schmierung der Molche in der Molchleitung (2) beim Bewegen des Molchpakets zwischen der Molch-Zielstation (3) und der Molch-Quellstation (1), und
f) einem steuerbaren Schmiermittelventil (4), das die Schmiermittel-Zuleitung (15) mit der Molchleitung (2) verbindet, um das Schmiermittel an einer Schmiermittel-Einspeisestelle in die Molchleitung (2) einzuleiten,
**dadurch gekennzeichnet,**
g) **dass** die Schmiermittel-Einspeisestelle in der Molchleitung (2) zwischen der Molch-Quellstation (1) und der Molch-Zielstation (3) liegt.

2. Beschichtungsmittel-Versorgungseinrichtung nach Anspruch 1, **dadurch gekennzeichnet,**
a) **dass** das Schmiermittelventil (4) in der Molchleitung (2) näher an der Molch-Zielstation (3) als an der Molch-Quellstation (1) angeordnet ist, und/oder
b) **dass** das Schmiermittelventil (4) in der Molchleitung (2) in den stromabwärtigen 50%, 40%, 30%, 20%, 10%, 5% oder 3%der Leitungslänge der Molchleitung (2) angeordnet ist, und/oder
c) **dass** das Schmiermittelventil (4) in der Molchleitung (2) in einem Abstand von weniger als 15 m, 10 m, 5 m, 3 m, 2 m, 1 m, 50 cm, 20 cm oder 10 cm zu der Molch-Zielstation (3) angeordnet ist.

3. Beschichtungsmittel-Versorgungseinrichtung nach einem der vorhergehenden Ansprüche, **gekennzeichnet durch** einen Sensor (9) an der Molchleitung (2) zur Erkennung des Füllungszustands der Molchleitung (2) an einer Messstelle, insbesondere zur Unterscheidung von Luft und Beschichtungsmittel in der Molchleitung (2).

4. Beschichtungsmittel-Versorgungseinrichtung nach Anspruch 3, **dadurch gekennzeichnet,**
a) **dass** der Sensor (9) zwischen dem Schmiermittelventil (4) und der Molch-Zielstation (3) angeordnet ist,
b) **dass** der Sensor (9) vorzugsweise näher an dem Schmiermittelventil (4) als an der Molch-Zielstation (3) angeordnet ist,
c) **dass** der Sensor (9) vorzugsweise in einem Abstand von weniger als 1 m, 50 cm, 25 cm oder 10 cm oder 5 cm von dem Sensor (9) angeordnet ist, damit der Sensor (9) möglichst nahe an der Schmiermittel-Einspeisestelle misst.

5. Beschichtungsmittel-Versorgungseinrichtung nach einem der vorhergehenden Ansprüche, **dadurch gekennzeichnet, dass** das Schmiermittelventil (4) in der Molchleitung (2) angeordnet ist und einen durchgehenden molchbaren Molchkanal (14) aufweist, der von den Molchen (5, 6) passiert werden kann.

6. Beschichtungsmittel-Versorgungseinrichtung nach Anspruch 5, **dadurch gekennzeichnet,**
a) **dass** das Schmiermittelventil (4) einen ersten Leitungsanschluss (12) aufweist, an den ein stromaufwärtiger Leitungsabschnitt der Molchleitung (2) angeschlossen ist,
b) **dass** das Schmiermittelventil (4) einen zweiten Leitungsanschluss (13) aufweist, an den ein stromabwärtiger Leitungsabschnitt der Molchleitung (2) angeschlossen ist,
c) **dass** der Molchkanal (14) in dem Schmiermittelventil (4) den ersten Leitungsanschluss (12) mit dem zweiten Leitungsanschluss (13) verbindet,
d) **dass** das Schmiermittelventil (4) einen Schmiermittelanschluss (15) aufweist, um das Schmiermittel zuzuführen,
e) **dass** die beiden Leitungsanschlüsse (12, 13) vorzugsweise axial fluchtend angeordnet sind,
f) **dass** die beiden Leitungsanschlüsse (12, 13) vorzugsweise als Schlauchanschlüsse und mit einem Schraubflansch ausgebildet sind.

7. Beschichtungsmittel-Versorgungseinrichtung nach einem der Ansprüche 2 bis 6, **dadurch gekennzeichnet,**
a) **dass** das Schmiermittelventil (4) eine verschiebbare Ventilnadel (16) enthält, die in Abhängigkeit von ihrer Ventilstellung einen Ventilsitz (17) entweder freigibt oder verschließt,
b) **dass** die Ventilnadel (16) des Schmiermittelventils (4) vorzugsweise rechtwinklig zu dem in dem Schmiermittelventil (4) verlaufenden Molchkanal (14) ausgerichtet ist,
c) **dass** das Schmiermittelventil (4) vorzugsweise pneumatisch gesteuert ist.

8. Beschichtungsmittel-Versorgungseinrichtung nach einem der vorhergehenden Ansprüche, **dadurch gekennzeichnet,**
a) **dass** eine elektrostatische Beschichtungsmittelaufladung vorgesehen ist, die die Molch-Zielstation (3) mindestens zeitweise auf ein Hochspannungspotential auflädt, und
b) **dass** die Molch-Quellstation (1) elektrisch geerdet ist.

9. Beschichtungsmittel-Versorgungseinrichtung nach einem der vorhergehenden Ansprüche, **dadurch gekennzeichnet,**
a) **dass** die Molch-Quellstation (1) eine steuerbare Ventilanordnung aufweist, wobei die Ventilanordnung in der Molch-Quellstation (1) die Molchleitung (2) wahlweise mit einer der folgenden Komponenten verbindet:
a1) mindestens einer Beschichtungsmittel-Zuführung (QFa, QFb, QFc, QFd),
a2) einer Spülmittel-Zuführung (QV),
a3) einer Druckluft-Zuführung (QMS),
a4) mindestens einer Spülleitung (QRFad, QRFbc) zum Spülen der Molch-Quellstation (1), a5) einer Entsorgung (RF),
a6) einer Zuleitung (QMS) für ein Schiebemedium zum Schieben der Molche zu der Molch-Zielstation (3), und/oder
b) **dass** die Molch-Zielstation (3) eine steuerbare Ventilanordnung aufweist, wobei die Ventilanordnung in der Molch-Zielstation (3) die Molchleitung (2) wahlweise mit einer der folgenden Komponenten verbindet:
b1) einer Farbleitung (ZF) zur Weiterleitung des entnommenen Beschichtungsmittels von der Molch-Zielstation (3) zu dem Applikator,
b2) einer Druckluft-Zuführung (ZND, ZHD),
b3) einer Spülmittel-Zuführung, und/oder
b4) Beschichtungsmittel-Rückführung (ZRF).

10. Beschichtungsmittel-Versorgungseinrichtung nach einem der vorhergehenden Ansprüche, **gekennzeichnet durch**
a) dass eine Steuereinheit (11) vorgesehen ist,
b) dass die Steuereinheit (11) die Ventilanordnung in der Molch-Quellstation (1) ansteuert,
c) dass die Steuereinheit (11) die Ventilanordnung in der Molch-Zielstation (3) ansteuert,
d) dass die Steuereinheit (11) den Sensor (9) abfragt, und
e) dass die Steuereinheit (11) das Schmiermittelventil (4) ansteuert.

11. Beschichtungsanlage zur Beschichtung von Bauteilen mit einem Beschichtungsmittel, insbesondere Lackieranlage zur Lackierung von Kraftfahrzeugkarosseriebauteilen, mit
a) einem Applikator zur Applikation des Beschichtungsmittels,
b) vorzugsweise einem Applikationsroboter, der den Applikator führt,
c) einer Beschichtungsmittel-Versorgungseinrichtung nach einem der vorhergehenden Ansprüche, die den Applikator mit dem Beschichtungsmittel versorgt.

12. Betriebsverfahren für eine Beschichtungsmittel-Versorgungseinrichtung nach einem der Ansprüche 1 bis 10, mit den folgenden Schritten:
a) Befüllen des Leitungsabschnitts der Molchleitung (2) in dem Molchpaket zwischen den beiden Molchen (5, 6) mit dem Beschichtungsmittel, wobei die Befüllung in der Molch-Quellstation (1) erfolgt,
b) Bewegen des Molchpakets mit dem zwischen den beiden Molchen (5, 6) eingespannten Beschichtungsmittel in der Molchleitung (2) von der Molch-Quellstation (1) zu der Molch-Zielstation (3), insbesondere durch Einleiten von Druckluft in die Molchleitung (2) an der Molch-Quellstation (1) stromaufwärts vor dem Molchpaket,
c) Entnahme des zwischen den beiden Molchen (5, 6) des Molchpakets in der Molchleitung (2) eingespannten Beschichtungsmittels, wobei die Beschichtungsmittelentnahme an der Molch-Zielstation (3) erfolgt,
d) Versorgung des Applikators mit dem aus dem Molchpaket entnommen Beschichtungsmittel und Applikation des Beschichtungsmittels, wobei überschüssiges Beschichtungsmittel in dem Molchpaket verbleibt,
e) Rückführen des Molchpakets mit dem zwischen den beiden Molchen (5, 6) eingespannten überschüssigen Beschichtungsmittel von der Molch-Zielstation (3) zu der Molch-Quellstation (1), insbesondere durch Einleiten von Druckluft in die Molchleitung (2) an der Molch-Zielstation (3) stromabwärts hinter dem Molchpaket,
f) Entnahme des zwischen den beiden Molchen (5, 6) eingespannten überschüssigen Beschichtungsmittel an der Molch-Quellstation (1), und
g) Rückführung des aus dem Molchpaket an der Molch-Quellstation (1) entnommenen überschüssigen Beschichtungsmittels in die Beschichtungsmittel-Rückführung (QFa-QFd),
h) Einleiten des Schmiermittels in die Molchleitung (2) an der Schmiermittel-Einspeisestelle, um die Reibung der Molche in der Molchleitung (2) beim Rückführen des Molchpakets von der Molch-Zielstation (3) zu der Molch-Quellstation (1) zu verringern,
**dadurch gekennzeichnet,**
i) **dass** die Schmiermittel-Einspeisestelle zwischen der Molch-Quellstation (1) und dem Molchpaket liegt.

13. Betriebsverfahren nach Anspruch 12, **dadurch gekennzeichnet,**
a) **dass** der Sensor (9) vor dem Einleiten des Schmiermittels prüft, ob sich die Schmiermittel-Einspeisestelle stromaufwärts vor dem Molchpaket befindet, insbesondere durch Prüfen, ob die Molchleitung (2) an der Schmiermittel-Einspeisestelle frei von dem Beschichtungsmittel ist, und
b) **dass** das Schmiermittel nur dann in die Molchleitung (2) eingespeist wird, wenn sich die Schmiermittel-Einspeisestelle stromaufwärts vor dem Molchpaket befindet.

14. Betriebsverfahren nach einem der Ansprüche 12 bis 13, **dadurch gekennzeichnet, dass** das Schmiermittel nach dem Rückführen des Molchpakets von der Molch-Zielstation (3) zu der Molch-Quellstation (1) in der Molch-Quellstation (1) in die Entsorgung (RF) entsorgt wird.

15. Betriebsverfahren nach einem der Ansprüche 12 bis 14, **dadurch gekennzeichnet, dass** das Molchpaket mit einer Geschwindigkeit von mehr als 1m/s, 2m/s, 5m/s, 10m/s oder 20m/s bewegt wird und zwar vorzugsweise bei der Rückwärtsbewegung von der Molch-Zielstation (3) zu der Molch-Quellstation (1) und/oder bei der Vorwärtsbewegung von der Molch-Quellstation (1) zu der Molch-Zielstation (3).

## Claims

1. Coating agent supply device for supplying coating agent to an applicator, in particular in a painting installation for painting motor vehicle body components, with
a) a pig source station (1),
b) a pig destination station (3),
c) a pig line (2), the pig line (2) connecting the pig source station (1) with the pig destination station (3),
d) a pig package with two pigs (5, 6) arranged in the pig line (2) for clamping the coating agent between the two pigs (5, 6) of the pig package for coating agent transport between the pig source station (1) and the pig-destination station (3),
e) a lubricant supply line (15) for supplying a lubricant for friction-reducing lubrication of the pigs in the pig line (2) when moving the pig package between the pig destination station (3) and the pig source station (1), and
f) a controllable lubricant valve (4), which connects the lubricant supply line (15) to the pig line (2) in order to introduce the lubricant into the pig line (2) at a lubricant feed point,
**characterized in**
g) **that** the lubricant feed point is located in the pig line (2) between the pig source station (1) and the pig destination station (3).

2. Coating agent supply device according to claim 1, **characterized in**
a) **that** the lubricant valve (4) in the pig line (2) is arranged closer to the pig destination station (3) than to the pig source station (1), and/or
b) **that** the lubricant valve (4) in the pig line (2) is arranged in the downstream 50%, 40%, 30%, 20%, 10%, 5% or 3% of the line length of the pig line (2), and/or
c) **that** the lubricant valve (4) in the pig line (2) is arranged at a distance of less than 15 m, 10 m, 5 m, 3 m, 2 m, 1 m, 50 cm, 20 cm or 10 cm from the pig destination station (3).

3. Coating agent supply device according to one of the preceding claims, **characterized by** a sensor (9) on the pig line (2) for detecting the filling state of the pig line (2) at a measuring point, in particular for distinguishing between air and coating agent in the pig line (2).

4. Coating agent supply device according to claim 3, **characterized in**
a) **that** the sensor (9) is arranged between the lubricant valve (4) and the pig destination station (3),
b) **that** the sensor (9) is preferably arranged closer to the lubricant valve (4) than to the pig destination station (3),
c) **that** the sensor (9) is preferably arranged at a distance of less than 1 m, 50 cm, 25 cm or 10 cm or 5 cm from the sensor (9), so that the sensor (9) measures as close as possible to the lubricant feed point.

5. Coating agent supply device according to one of the preceding claims, **characterized in that** the lubricant valve (4) is arranged in the pig line (2) and has a continuous piggable pig channel (14) which can be passed by the pigs (5, 6).

6. Coating agent supply device according to claim 5, **characterized in**
a) **that** the lubricant valve (4) comprises a first line connection (12) to which an upstream line section of the pig line (2) is connected,
b) **that** the lubricant valve (4) comprises a second line connection (13) to which a downstream line section of the pig line (2) is connected,
c) **that** the pig channel (14) in the lubricant valve (4) connects the first line connection (12) with the second line connection (13),
d) **that** the lubricant valve (4) comprises a lubricant connection (15) to supply the lubricant,
e) **that** the two line connections (12, 13) are preferably arranged axially aligned,
f) **that** the two line connections (12, 13) are preferably designed as hose connections and with a screw flange.

7. Coating agent supply device according to one of claims 2 to 6, **characterized in**
a) **that** the lubricant valve (4) contains a displaceable valve needle (16) which either releases or closes a valve seat (17) depending on its valve position,
b) **that** the valve needle (16) of the lubricant valve (4) is preferably aligned at right angles to the pig channel (14) running in the lubricant valve (4),
c) **that** the lubricant valve (4) is preferably pneumatically controlled.

8. Coating agent supply device according to one of the preceding claims, **characterized in**
a) **that** an electrostatic coating agent charging system is provided which charges the pig destination station (3) to a high voltage potential at least temporarily, and
b) **that** the pig source station (1) is electrically grounded.

9. Coating agent supply device according to one of the preceding claims, **characterized in**
a) **that** the pig source station (1) comprises a controllable valve arrangement, the valve arrangement in the pig source station (1) selectively connecting the pig line (2) to one of the following components:
a1) at least one coating agent supply (QFa, QFb, QFc, QFd),
a2) a rinsing agent supply (QV),
a3) a compressed air supply (QMS),
a4) at least one flushing line (QRFad, QRFbc) for flushing the pig source station (1), a5) a disposal (RF),
a6) a feed line (QMS) for a pushing medium for pushing the pigs to the pig destination station (3), and/or
b) **that** the pig destination station (3) comprises a controllable valve arrangement, the valve arrangement in the pig destination station (3) selectively connecting the pig line (2) to one of the following components:
b1) a paint line (ZF) for forwarding the removed coating agent from the pig destination station (3) to the applicator,
b2) a compressed air supply (ZND, ZHD),
b3) a rinsing agent supply, and/or
b4) coating agent return (ZRF).

10. Coating agent supply device according to one of the preceding claims, **characterized in**
a) **that** a control unit (11) is provided,
b) **that** the control unit (11) controls the valve arrangement in the pig source station (1),
c) **that** the control unit (11) controls the valve arrangement in the pig destination station (3),
d) **that** the control unit (11) queries the sensor (9), and
e) **that** the control unit (11) controls the lubricant valve (4).

11. Coating system for coating components with a coating agent, in particular painting installation for painting motor vehicle body components, with
a) an applicator for applying the coating agent,
b) preferably an application robot that guides the applicator,
c) a coating agent supply device according to one of the preceding claims, which supplies the applicator with the coating agent.

12. Operating method for a coating agent supply device according to one of claims 1 to 10, with the following steps:
a) filling the line section of the pig line (2) in the pig package between the two pigs (5, 6) with the coating agent, the filling taking place in the pig source station (1),
b) moving the pig package with the coating agent clamped between the two pigs (5, 6) in the pig line (2) from the pig source station (1) to the pig destination station (3), in particular by introducing compressed air into the pig line (2) at the pig source station (1) upstream in front of the pig package,
c) removal of the coating agent clamped between the two pigs (5, 6) of the pig package in the pig line (2), the coating agent being removed at the pig destination station (3),
d) supplying the applicator with the coating agent taken from the pig package and applying the coating agent, with excess coating agent remaining in the pig package,
e) returning the pig package with the excess coating agent clamped between the two pigs (5, 6) from the pig destination station (3) to the pig source station (1), in particular by introducing compressed air into the pig line (2) at the pig destination station (3) downstream behind the pig package,
f) removal of the excess coating agent clamped between the two pigs (5, 6) at the pig source station (1), and
g) returning the excess coating agent removed from the pig package at the pig source station (1) to the coating agent return (QFa-QFd),
h) introducing the lubricant into the pig line (2) at the lubricant feed point in order to reduce the friction of the pigs in the pig line (2) when returning the pig package from the pig destination station (3) to the pig source station (1),
**characterized in**
i) **that** the lubricant feed point is between the pig source station (1) and the pig package.

13. Operating method according to claim 12, **characterized in**
a) **that** before introducing the lubricant, the sensor (9) checks whether the lubricant feed point is located upstream of the pig package, in particular by checking whether the pig line (2) at the lubricant feed point is free of the coating agent, and
b) **that** the lubricant is only fed into the pig line (2) if the lubricant feed point is located upstream of the pig package.

14. Operating method according to one of claims 12 to 13, **characterized in that,** after returning the pig package from the pig destination station (3) to the pig source station (1), the lubricant in the pig source station (1) is disposed of into the disposal (RF).

15. Operating method according to one of claims 12 to 14, **characterized in that** the pig package is moved at a speed of more than 1m/s, 2m/s, 5m/s, 10m/s or 20m/s, preferably during the backward movement from the pig destination station (3) to the pig source station (1) and/or in the forward movement from the pig source station (1) to the pig destination station (3).

## Revendications

1. Dispositif d'alimentation en agent de revêtement pour alimenter un applicateur en agent de revêtement, en particulier dans un atelier de peinture pour peindre des éléments de carrosserie de véhicules automobiles, avec
a) une station source de raclage (1),
b) une station cible de raclage (3),
c) une ligne de racleurs (2), la ligne de racleurs (2) reliant la station source de raclage (1) à la station cible de raclage (3),
d) un paquet de racleurs comportant deux racleurs (5, 6) agencés dans la ligne de racleurs (2) pour serrer l'agent de revêtement entre les deux racleurs (5, 6) du paquet de racleurs pour le transport de l'agent de revêtement entre la station source de raclage (1) et la station cible de raclage (3),
e) une conduite d'alimentation en lubrifiant (15) visant à fournir un lubrifiant pour une lubrification réduisant la friction des racleurs dans la ligne de racleurs (2) lors du déplacement du paquet de racleurs entre la station cible de raclage (3) et la station source de raclage (1), et
f) une vanne à lubrifiant commandable (4), qui relie la conduite d'alimentation en lubrifiant (15) à la ligne de racleurs (2) afin d'introduire le lubrifiant dans la ligne de racleurs (2) à un point d'alimentation en lubrifiant,
**caractérisé en ce que**
g) le point d'alimentation en lubrifiant est situé dans la ligne de racleurs (2) entre la station source de raclage (1) et la station cible de raclage (3).

2. Dispositif d'alimentation en agent de revêtement selon la revendication 1, **caractérisé en ce que**
a) la vanne à lubrifiant (4) dans la ligne de racleurs (2) est agencée plus près de la station cible de raclage (3) que de la station source de raclage (1), et/ou
b) la vanne à lubrifiant (4) dans la ligne de racleurs (2) est agencée en aval sur 50 %, 40 %, 30 %, 20 %, 10 %, 5 % ou 3 % de la longueur de conduite de la ligne de racleurs (2), et/ou
c) la vanne à lubrifiant (4) dans la ligne de racleurs (2) est agencée à une distance inférieure à 15 m, 10 m, 5 m, 3 m, 2 m, 1 m, 50 cm, 20 cm ou 10 cm de la station cible de raclage (3).

3. Dispositif d'alimentation en agent de revêtement selon l'une des revendications précédentes, **caractérisé par** un capteur (9) sur la ligne de racleurs (2) pour détecter l'état de remplissage de la ligne de racleurs (2) à un point de mesure, en particulier pour distinguer l'air de l'agent de revêtement dans la ligne de racleurs (2).

4. Dispositif d'alimentation en agent de revêtement selon la revendication 3, **caractérisé en ce que**
a) le capteur (9) est agencé entre la vanne à lubrifiant (4) et la station cible de raclage (3),
b) le capteur (9) est agencé de préférence plus près de la vanne à lubrifiant (4) que de la station cible de raclage (3),
c) le capteur (9) est agencé de préférence à une distance inférieure à 1 m, 50 cm, 25 cm ou 10 cm ou 5 cm du capteur (9) de manière à ce que le capteur (9) puisse prendre les mesures le plus près possible du point d'alimentation en lubrifiant.

5. Dispositif d'alimentation en agent de revêtement selon l'une des revendications précédentes, **caractérisé en ce que** la vanne à lubrifiant (4) est agencée dans la ligne de racleurs (2) et présente un canal de racleurs continu (14) pouvant être traversé par les racleurs (5, 6).

6. Dispositif d'alimentation en agent de revêtement selon la revendication 5, **caractérisé en ce que**
a) la vanne à lubrifiant (4) présente un premier raccord de conduite (12) auquel est raccordée une section de conduite en amont de la ligne de racleurs (2),
b) la vanne à lubrifiant (4) présente un deuxième raccord de conduite (13) auquel est raccordée une section de ligne en aval de la ligne de racleurs (2),
c) le canal de racleurs (14) dans la vanne à lubrifiant (4) relie le premier raccord de conduite (12) au deuxième raccord de conduite (13),
d) la vanne à lubrifiant (4) présente un raccord de lubrifiant (15) pour acheminer le lubrifiant,
e) les deux raccords de conduite (12, 13) sont, de préférence, agencés en alignement axial,
f) les deux raccords de conduite (12, 13) sont, de préférence, conçus sous forme de raccords pour tuyaux flexibles et avec une bride à vis.

7. Dispositif d'alimentation en agent de revêtement selon l'une des revendications 2 à 6,
**caractérisé en ce que**
a) la vanne à lubrifiant (4) contient un pointeau de vanne (16) déplaçable qui, en fonction de sa position de vanne, libère ou ferme un siège de vanne (17),
b) le pointeau (16) de la vanne à lubrifiant (4) est de préférence orienté perpendiculairement au canal de racleurs (14) s'étendant dans la vanne à lubrifiant (4),
c) la vanne à lubrifiant (4) est de préférence commandée pneumatiquement.

8. Dispositif d'alimentation en agent de revêtement selon l'une des revendications précédentes,
**caractérisé en ce que**
a) il est prévu une charge d'agent de revêtement électrostatique qui charge au moins temporairement la station cible de raclage (3) à un potentiel haute tension, et
b) la station source de raclage (1) est électriquement mise à la terre.

9. Dispositif d'alimentation en agent de revêtement selon l'une des revendications précédentes,
**caractérisé en ce que**
a) la station source de raclage (1) présente un agencement de vannes commandable, l'agencement de vannes dans la station source de raclage (1) reliant sélectivement la ligne de racleurs (2) à l'un des composants suivants :
a1) au moins une alimentation en agent de revêtement (QFa, QFb, QFc, QFd), a2) une alimentation en détergent (QV),
a3) une alimentation en air comprimé (QMS),
a4) au moins une conduite de rinçage (QRFad, QRFbc) pour rincer la station source de raclage (1), a5) une évacuation (RF),
a6) une conduite d'alimentation (QMS) pour un moyen de poussée, afin de pousser les racleurs vers la station cible de raclage (3), et/ou
b) la station cible de raclage (3) présente un agencement de vannes commandable, l'agencement de vannes dans la station cible de raclage (3) reliant sélectivement la ligne de racleurs (2) à l'un des composants suivants :
b1) une conduite de peinture (ZF) pour acheminer l'agent de revêtement retiré de la station cible de raclage (3) vers l'applicateur,
b2) une conduite d'alimentation en air comprimé (ZND, ZHD),
b3) une conduite d'alimentation en détergent, et/ou
b4) une conduite de retour d'agent de revêtement (ZRF).

10. Dispositif d'alimentation en agent de revêtement selon l'une des revendications précédentes,
**caractérisé en ce que**
a) il est prévu une unité de commande (11),
b) l'unité de commande (11) commande l'agencement de vannes dans la station source de raclage (1),
c) l'unité de commande (11) commande l'agencement de vannes dans la station cible de raclage (3),
d) l'unité de commande (11) interroge le capteur (9), et
e) l'unité de commande (11) commande la vanne à lubrifiant (4).

11. Système de revêtement pour revêtir des éléments avec un agent de revêtement, en particulier système de peinture pour peindre des pièces de carrosserie de véhicules automobiles, avec
a) un applicateur pour appliquer l'agent de revêtement,
b) de préférence un robot d'application qui guide l'applicateur,
c) un dispositif d'alimentation en agent de revêtement selon l'une des revendications précédentes, qui alimente l'applicateur en agent de revêtement.

12. Procédé de fonctionnement d'un dispositif d'alimentation en agent de revêtement selon l'une des revendications 1 à 10, avec les étapes suivantes :
a) remplir la section de conduite de la ligne de racleurs (2) dans le paquet de racleurs entre les deux racleurs (5, 6) avec l'agent de revêtement, le remplissage ayant lieu dans la station source de raclage (1),
b) déplacer le paquet de racleurs avec l'agent de revêtement serré entre les deux racleurs (5, 6) dans la ligne de racleurs (2) depuis la station source de raclage (1) jusqu'à la station cible de raclage (3), notamment par l'introduction d'air comprimé dans la ligne de racleurs (2) au niveau de la station source de raclage (1) en amont devant le paquet de racleurs,
c) retirer l'agent de revêtement serré entre les deux racleurs (5, 6) du paquet de racleurs dans la ligne de racleurs (2), l'agent de revêtement étant retiré au niveau de la station cible de raclage (3),
d) fournir à l'applicateur l'agent de revêtement retiré du paquet de racleurs et appliquer l'agent de revêtement, l'excédent d'agent de revêtement restant dans le paquet de racleurs,
e) renvoyer le paquet de racleurs avec l'excédent d'agent de revêtement serré entre les deux racleurs (5, 6) de la station cible de raclage (3) à la station source de raclage (1), notamment en introduisant de l'air comprimé dans la ligne de racleurs (2) sur la station cible de raclage (3) en aval derrière le paquet de racleurs,
f) retrait de l'excédent d'agent de revêtement serré entre les deux racleurs (5, 6) au niveau de la station source de raclage (1), et
g) renvoyer l'excédent d'agent de revêtement retiré du paquet de racleurs au niveau de la station source de raclage (1) vers le système de retour d'agent de revêtement (QFa-QFd),
h) Introduction du lubrifiant dans la ligne de racleurs (2) au point d'alimentation en lubrifiant afin de réduire la friction des racleurs dans la ligne de racleurs (2) lors du retour du paquet de racleurs de la station cible de raclage (3) à la station source de raclage (1),
**caractérisé en ce que**
i) le point d'alimentation en lubrifiant se situe entre la station source de raclage (1) et le paquet de racleurs.

13. Procédé de fonctionnement selon la revendication 12, **caractérisé en ce que**
a) avant d'introduire le lubrifiant, le capteur (9) vérifie si le point d'alimentation en lubrifiant se trouve en amont du paquet de racleurs, notamment en vérifiant si la ligne de racleurs (2) au niveau du point d'alimentation en lubrifiant est exempte d'agent de revêtement, et
b) le lubrifiant n'est introduit dans la ligne de racleurs (2) que si le point d'alimentation en lubrifiant se trouve en amont du paquet de racleurs.

14. Procédé de fonctionnement selon l'une des revendications 12 à 13, **caractérisé en ce que** le lubrifiant est déchargé dans la décharge (RF), après le retour du paquet de racleurs de la station cible de raclage (3) à la station source de raclage (1) dans la station source de raclage (1).

15. Procédé de fonctionnement selon l'une des revendications 12 à 14, **caractérisé en ce que** le paquet de racleurs est déplacé à une vitesse supérieure à 1 m/s, 2 m/s, 5 m/s, 10 m/s ou 20 m/s, de préférence lors du mouvement vers l'arrière de la station cible de raclage (3) à la station source de raclage (1) et/ou lors du mouvement vers l'avant de la station source de raclage (1) à la station cible de raclage (3).
